# EUROPÄISCHE PATENTSCHRIFT

(11) **EP 1 747 389 B1**
(45) Veröffentlichungstag und Bekanntmachung des Hinweises auf die Patenterteilung: **14.11.2007**
(21) Anmeldenummer: 05741675.2
(22) Anmeldetag: 19.05.2005
(51) Int. Cl.: F16H 63/20

(54) **SCHALTVORRICHTUNG FÜR EIN MEHRGÄNGIGES GETRIEBE**
SHIFTING DEVICE FOR A MULTISPEED GEARBOX
DISPOSITIF COMMUTATEUR D'UNE BOITE DE VITESSES MULTIPLE

(30) Priorität: 19.05.2004 DE 102004024679
(43) Veröffentlichungstag der Anmeldung: 31.01.2007
(73) Patentinhaber: ZF FRIEDRICHSHAFEN AG, 88038 Friedrichshafen (DE)
(72) Erfinder: DRABEK, Michael, 14776 Brandenburg (DE); MENZEL, Michael, 07743 Jena (DE)
(86) Internationale Anmeldenummer: PCT/EP2005/005433
(87) Internationale Veröffentlichungsnummer: WO 2005/114010

(56) Entgegenhaltungen:
- WO-A-20/04046588
- DE-A1- 10 206 561
- US-A- 4 335 623

## Beschreibung

Die Erfindung betrifft eine Schaltvorrichtung für ein mehrgängiges Getriebe nach der im Oberbegriff von Anspruch 1 näher definierten Art. Eine solche Schaltvorrichtung ist aus US-A-4 335 623 bekannt.

Aus der DE 41 37 143 A1 ist ein mehrstufiges synchronisiertes Vorgelegegetriebe bekannt, bei dem jeweils zwei Gänge einem von mehreren Schaltpaketen zugeordnet sind. Diese Schaltpakete bestehen aus axial verschiebbar, aber drehfest auf einer Getriebewelle angeordneten Schiebemuffen, die im Zusammenwirken mit benachbart zu diesen Schiebemuffen auf der Welle angeordneten Synchronringen Loszahnräder abbremsen oder beschleunigen und mit dieser Getriebewelle drehfest verbinden können.

Aus der EP 1 034 384 B1 ist ein 12-Gang-Schaltgetriebe für Nutzfahrzeuge bekannt, bei dem eine Vorschaltgruppe manuell geschaltet wird, während die Hauptschalt- bzw. Nachschaltgruppe automatisch geschaltet werden. Für die Hauptschalt- und Nachschaltgruppe sind pneumatische Schalteinrichtungen vorgesehen, die beim Wählen der Schaltgasse des gewünschten Getriebeganges mittels der manuellen Schalteinrichtung entsprechend aktiviert werden.

Die DE 35 27 390 A1 zeigt ein handschaltbares Doppelkupplungsgetriebe, bei dem bei Betätigung des Ganghebels in einer Schaltgasse eine der beiden Kupplungen der Doppelkupplung geschlossen wird.

Aus der nicht vorveröffentlichten DE 102 31 547 A1 ist eine Schaltvorrichtung für ein Getriebe bekannt, bei dem mindestens ein Schaltpaket zwei nicht aufeinanderfolgenden Übersetzungsstufen des Getriebes zugeordnet ist. Diese Schaltvorrichtung ist mit einer mechanischen Konvertierungsvorrichtung ausgestattet, durch die eine Handschaltvorrichtung mit einer H-Schaltkulisse ein solches Getriebe schalten kann.

Bei dieser Schaltvorrichtung ist der Getriebeschalthebel mit Getriebeschaltwellen gekoppelt, so dass ein Bewegung des Schalthebels in einer Schaltgasse zu einer Verschwenkung der Schaltwelle um deren Längsachse führt. Darüber hinaus ist auf der ersten Schaltwelle ein erstes Zahnrad befestigt, das mit einem zweiten Zahnrad auf einer zweiten Schaltwelle kämmt. Bei einer Drehung der ersten Schaltwelle dreht sich die zweite Schaltwelle daher gegenläufig in die andere Richtung Bei der Anwahl einer Schaltgasse durch den Getriebeschalthebel werden die beiden Schaltwellen zwangsgekoppelt parallel zu ihrer Längsachse verschoben.

Außerdem verfügen die Schaltwellen über Schaltfinger, die in Abhängigkeit von dem eingelegten Getriebegang in gangindividuelle Vertiefungen von Schaltstangen greifen, welche mit Schaltgabeln verbunden sind. Diese Schaltgabeln stehen ihrerseits mit den Schiebemuffen der Schaltpakete in Verbindung, die bei einer Schaltbetätigung zur drehfesten Verbindung von Losrädern mit einer Getriebewelle axial auf der jeweiligen Getriebewelle verschoben werden.

Die nicht vorveröffentlichte DE 102 53 471 A1 beschreibt eine Einstangenschaltung für beliebig setzbare Gangpositionen eines Schaltgetriebes, bei der ein fahrerseitiger Schalt- und Wählhebel mit einer axial verschiebbaren und um ihre Längsachse verschwenkbaren Schaltfingerwelle gekoppelt ist. Diese Schaltfingerwelle verfügt für jeden Getriebegang über Schaltfinger zum Einlegen und Auslegen von Getriebegängen, die in Aussparungen von jeweils zwei Getriebegängen zugeordneten Schaltrahmen eingtreifen.

Zur Anwahl eines Getriebegangs wird die Schaltfingerwelle axial verschoben und zum Einlegen eines Gangs um ihre Längsachse verdreht, so dass, gangbezogen, jeweils ein Schaltfinger in eine Aussparung des angewählten Schaltrahmens eingreift und diesen im wesentlichen senkrecht zur Längsachse der Schaltfingerwelle verschiebt. Mit den Schaltrahmen verbundene Schaltstangen wirken jeweils auf Schaltgabeln ein, mit denen Schiebemuffen zum drehfesten Verbinden von Getriebeloszahnrädern mit deren Radsatzwelle auf dieser axial verschiebbar sind. An den Schaltrahmen sind radial zur Schaltfingerwelle Sperrnocken ausgebildet, die ein unzulässiges Einfahren von Schaltfingern in den jeweiligen Schaltrahmen verhindern.

Die aus dem Stand der Technik bekannten Schaltvorrichtungen für Getriebe weisen jedoch den Nachteil auf, dass der Aufbau dieser Schaltvorrichtungen mechanisch sehr aufwendig ist.

Der vorliegenden Erfindung liegt die Aufgabe zugrunde, eine Schaltvorrichtung für Getriebe darzustellen, die einen mechanisch einfachen Aufbau aufweist, deren Betätigung leicht automatisierbar und die für veschiedene Getriebetypen einsetzbar ist.

Die der Erfindung zugrunde liegende Aufgabe wird durch eine, auch die kennzeichnenden Merkmale des Hauptanspruchs aufweisende, gattungsgemäße Schaltvorrichtung für ein Getriebe gelöst.

Die Erfindung betrifft eine Schaltvorrichtung für ein mehrgängiges Getriebe, mit einer Schalt- und Wählwelle zum Anwählen und Schalten von Getriebegängen, an der für jeden Getriebegang zum Einlegen und Herausnehmen der Getriebegänge gesonderte Schaltfinger ausgebildet sind. Zudem verfügt diese erfindungsgemäße Schaltvorrichtung über eine Mehrzahl von Schaltrahmen, deren jeweilige Öffnung von der Schalt- und Wählwelle durchsetzt sind. An jedem dieser Schaltrahmen ist wenigstens ein Schub-Zug-Element angebracht, welche mit Koppelmittel verbunden sind, mit deren Hilfe Getriebelosräder mit einer Getriebewelle drehfest verbindbar sind. Die Schaltrahmen weisen Mittel auf, die bei einer Drehung der Schalt- und Wählwelle im Zusammenwirken mit den Schaltfingern die Schaltrahmen quer zur Längsachse dieser Schalt- und Wählwelle verschieben.

Zur Lösung der gestellten Aufgabe ist in Kombination mit den genannten Merkmalen vorgesehen, dass die Schalt- und Wählwelle mit den Schaltfingern in dem Schaltrahmen gelagert ist und Sperrelemente aufweist, die mit eine Betätigungskontur und einen Sperrradius aufweisenden Schaltrahmen jeden Getriebegang anwählen und schalten kann. Die Wählbewegung der Schalt- und Wählwelle erfolgt durch Verschiebung, das Schalten durch Drehung der Welle. Befindet sich ein Schaltfinger in einer für ihn vorgesehenen Nut und auf gleicher Ebene wie der Schaltrahmen, kann der Gang geschaltet werden, da der Radius des Schaltfingers über dem Sperrradius kleiner ist als der Sperrradius selbst. Ist die Schalt- und Wählwelle so verschoben, dass ein Sperrelement auf gleicher Ebene wie der Schaltrahmen steht, kann der Schaltrahmen nur in seinem Spiel verschoben werden. Diese Veschiebung ist allerdings kleiner als der Weg, der zum Ansynchronisieren benötigt wird. Demzufolge kann jeweils immer nur ein Gang geschaltet werden, während alle anderen Gänge über die Kombination Sperrelement und Sperrradius in ihrer Bewegung behindert werden. Die Betätigung von zwei Schaltrahmen führt ebenso zum Stopp der Bewegung und kann nur durch Abweiskonturen oder -kulissen gelöst werden.

Im folgenden wird die Erfindung anhand der Figuren beispielhaft näher erläutert, in denen vorteilhafte Ausführungsbeispiele dargestellt sind.

Es zeigen:
- Fig. 1: eine erfindungsgemäße Schaltvorrichtung mit einem Schaltrahmen in geschalteter Position und
- Fig. 2: eine erfindungsgemäße Schaltvorrichtung mit einem durch ein Sperrelement gesperrten Schaltrahmen.

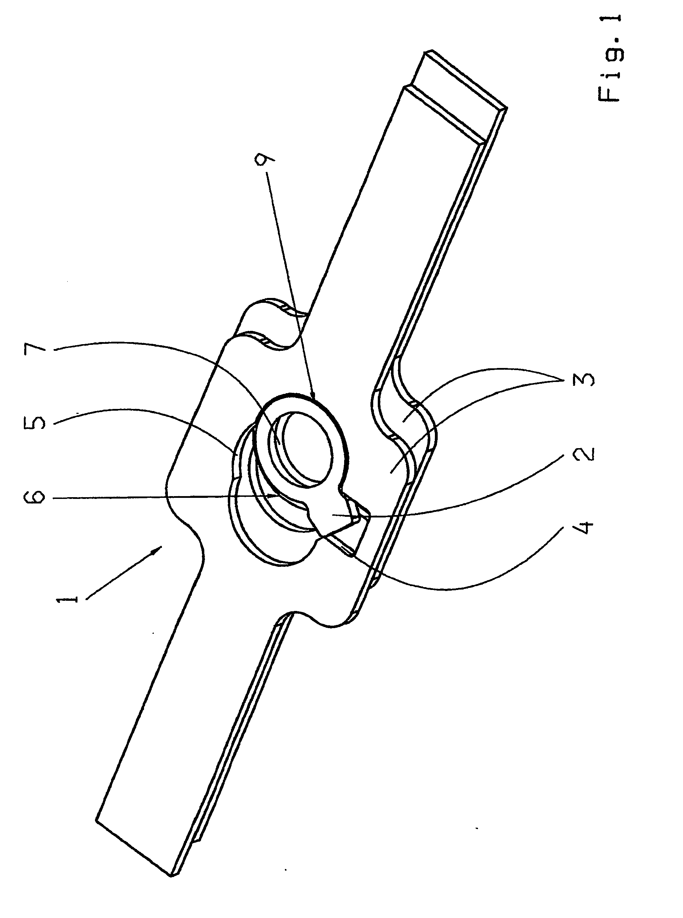

In der Fig. 1 sind die für die Erfindung wesentlichen Bauteile einer erfindungsgemäßen Schaltvorrichtung 1 dargestellt. Eine nicht dargestellte Schalt- und Wählwelle weist Schaltfinger 2 und Schaltrahmen 3 auf, wobei die Schaltrahmen 3 Mittel 4 aufweisen, beispielsweise in Form einer Nut, die bei Drehung der nicht dargestellten Schalt- und Wählwelle durch Zusammenwirken mit den Schaltfingern 2 die Schaltrahmen 3 quer zur Längsachse der Schalt- und Wählwelle verschieben. Die Schalt- und Wählwelle mit den Schaltfingern 2 ist in dem Schaltrahmen 3 gelagert. Die nicht dargestellte Schalt- und Wählwelle weist weiterhin ein Sperrelement 7 auf, die in Verbindung mit dem eine Betätigungskontur 5 und einen Sperrradius 6 aufweisenden Schaltrahmen 3 jeden gewünschten Getriebegang anwählen und schalten kann. Die Wählbewegung erfolgt durch Verschieben der Schalt- und Wählwelle, das Schalten der Gänge durch Drehung der Schalt- und Wählwelle. Der Schaltfinger 2 weist einen Radius 9 auf, der kleiner ist als der Radius 6 des Sperrelements 7. Der Schaltrahmen 3 befindet sich in geschalteter Position.

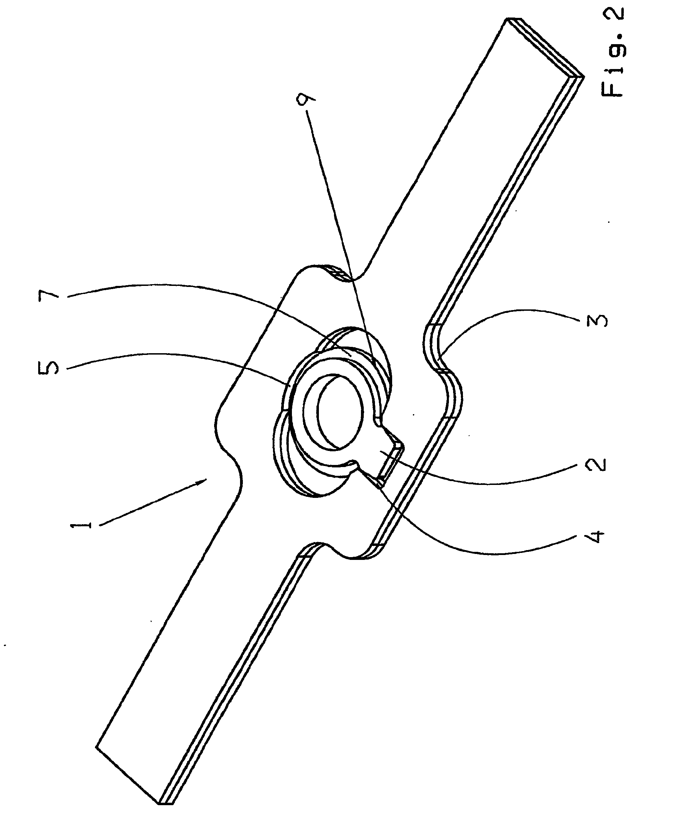

In Fig. 2 ist ein durch das Sperrelement 7 gesperrter Schaltrahmen 3 dargestellt. Der Radius 9 des Sperrelements 7 blockiert eine Bewegung des Schaltrahmens 3.

### Bezugszeichen

- 1: Schaltvorrichtung
- 2: Schaltfinger
- 3: Schaltrahmen
- 4: Öffnungen
- 5: Betätigungskontur
- 6: Sperrradius
- 7: Sperrelement
- 8: -
- 9: Radius

## Patentansprüche

1. Schaltvorrichtung (1) für ein mehrgängiges Getriebe mit einer Schalt- und Wählwelle, an der zum Einlegen und Herausnehmen von Getriebegängen Schaltfinger (2) ausgebildet sind, mit Schaltrahmen (3), deren jeweilige Öffnungen (4) von der Schalt- und Wählwelle durchsetzt sind, wobei an den Schaltrahmen (3) Mittel vorhanden sind, die bei Drehung der Schalt- und Wählwelle durch Zusammenwirken mit den Schaltfingern (2) die Schaltrahmen (3) quer zur Längsachse der Schalt- und Wählwelle verschieben, **dadurch gekennzeichnet , dass** die Schalt- und Wählwelle mit den Schaltfingern (2) in dem Schaltrahmen (3) gelagert ist und Sperrelemente (7) aufweist, die in Verbindung mit dem eine Betätigungskontur (5) und einen Sperrradius (6) aufweisenden Schaltrahmen (3) jeden Getriebegang anwählen und schalten kann.

2. Schaltvorrichtung nach Anspruch 1, **dadurch gekennzeichnet, dass** die Wählbewegung durch Verschiebung der Schalt- und Wählwelle , das Schalten der Gänge durch Drehung der Schalt- und Wählwelle erfolgt.

3. Schaltvorrichtung nach Anspruch 1, **dadurch gekennzeichnet, dass** ein Radius (9) des Schaltfingers (2) kleiner als der Radius (6) der Sperrelemente (7) selbst ist.

4. Schaltvorrichtung nach Anspruch 3, **dadurch gekennzeichnet, dass** der Schaltrahmen (3) nur in seinem Spiel verschoben werden kann, wenn das Sperrelement (7) auf gleicher Ebene wie der Schaltrahmen (3) steht.

5. Schaltvorrichtung nach Anspruch 1, **dadurch gekennzeichnet, dass** jeweils immer nur ein Gang geschaltet werden kann und alle anderen Gänge über die Kombination Radius (6) des Sperrelements (7) und Sperrradius (6) gesperrt sind.

6. Schaltvorrichtung nach Anspruch 1, **dadurch gekennzeichnet, dass** durch die Betätigung von zwei Schaltrahmen (3) nur ein Gang geschaltet werden kann und alle anderen Gänge gesperrt sind.

## Claims

1. Shift device (1) for a multi-speed transmission with a shift and selector shaft which features shift fingers (2), for the engagement and disengagement of the transmission's gears, with shift frames (3), where the respective orifices (4) are penetrated by the shift and selector shaft, whereas means are made available at the shift frames (3) which offset the shift frames (3) transverse to the longitudinal axis of the shift and selector shaft by means of turning the shift and selector shaft in combination with the shift fingers (2),
**characterized in that** the shift and selector shaft with the shift fingers (2) are suspended in the shift frame (3) and reveals locking elements (7) which, in combination with shift frame (3) featuring an actuation contour (5) and a locking radius (6), can select and actuate any given gear of the transmission.

2. Shift device according to claim 1, **characterized in that** the selector motion is triggered by offsetting the shift and selector shaft, the engagement of the gears caused by turning the shift and selector shaft.

3. Shift device according to claim 1, **characterized in that** a radius (9) of the shift finger (2) is smaller than the radius (6) of the locking elements (7) themselves.

4. Shift device according to claim 3, **characterized in that** the shift frame (3) can only be offset at its level if the locking element (7) is at the same level as the shift frame (3).

5. Shift device according to claim 1, **characterized in that** there is always only one gear that can be engaged and that all other gears are locked by means of the combination of the radius (6) of the locking element (7) and the locking radius (6).

6. Shift device according to claim 1, **characterized in that** there is only one gear that can be engaged by means of the actuation of two shift frames (3) and that all other gears are locked.

## Revendications

1. Dispositif de changement de vitesses (1) pour une boîte de vitesses à plusieurs rapports dotée d'un arbre de commande et de sélection, celui-ci étant pourvu de doigts de commande (2) pour l'engagement et le désengagement des vitesses, doté de cadres de commande (3), dont les orifices (4) sont traversés par l'arbre de commande et de sélection, sachant que les cadres de commande (3) sont dotés d'éléments, ceux-ci permettant, en combinaison avec les doigts de commande (2) de déplacer les cadres de commande (3) dans le sens transversal par rapport à l'axe longitudinal lorsque l'arbre de commande et de sélection tourne, **caractérisé en ce que** l'arbre de commande et de sélection est logé par les doigts de commande (2) dans le cadre de commande (3) et **en ce qu'**il comporte des éléments de verrouillage (7), permettant, en combinaison avec le cadre de commande (3) comportant un profil d'actionnement (5) et un rayon de verrouillage (6), de sélectionner et d'engager chaque rapport de boîte de vitesses.

2. Dispositif de changement de vitesses selon la revendication 1, **caractérisé en ce que** la sélection des rapports s'effectue par le déplacement de l'arbre de commande et de sélection et l'engagement des rapports s'effectue par la rotation de l'arbre de commande et de sélection.

3. Dispositif de changement de vitesses selon la revendication 1, **caractérisé en ce que** le rayon (9) du doigt de commande (2) est inférieur au rayon (6) des éléments de verrouillage (7).

4. Dispositif de changement de vitesses selon la revendication 3, **caractérisé en ce que** le cadre de commande (3) ne peut être déplacé dans un jeu prédéterminé que lorsque l'élément de verrouillage (7) se trouve au même plan du cadre de commande (3).

5. Dispositif de changement de vitesses selon la revendication 1, **caractérisé en ce qu'**il n'est possible d'engager qu'un seul rapport à la fois, tous les autres rapports étant verrouillés par la combinaison du rayon (6) de l'élément de verrouillage (7) et le rayon de verrouillage (6).

6. Dispositif de changement de vitesses selon la revendication 1, **caractérisé en ce que** par l'actionnement de deux cadres de commande (3) ne peut être engagé qu'un seul rapport, tous les autres rapports étant verrouillés.
